# EUROPEAN PATENT APPLICATION

(11) **EP 2 460 428 A1**
(43) Date of publication of application: **06.06.2012**
(21) Application number: 11191970.0
(22) Date of filing: 05.12.2011
(51) Int. Cl.: A43B 13/26, B29D 35/14, A43B 13/12, B29D 35/00

(54) **Method for fabricating a footwear sole**

(30) Priority: 03.12.2010 CN 201010572489
(71) Applicant: Chaussures Regence Inc., Quebec QC G2N 2G7 (CA)
(72) Inventor: Chengjie, Xu, Houjie Town Dongguand City (CN); Fuqiang, Wang, XiangFan City (CN)
(74) Representative: Parzy, Benjamin Alain

(57) **Abstract**

A method for forming a footwear sole (10) is disclosed. Specifically, there is provided a sole mould for fabricating high-quality shoe soles with great efficiency and a method of using such a mould, wherein the soles feature good air permeability and perfect match with the feet by automatically adapting themselves to the shape of the feet. The sole mould includes a first mould (26) for injection-moulding the underside of a leather layer, and a second mould (28) for injection-moulding the upper surface of the leather layer to form the sole. Further, the first mould is configured in the same shape as the fore sole of the foot and the second mould is configured in the shape of a complete sole.

## Description

### TECHNICAL FIELD

The present invention relates to a technology for making footwear, and particularly relates to a mould for making shoe soles and its usage.

### BACKGROUND OF THE INVENTION

Ordinary shoe soles are generally formed up by one or two types of materials, which have poor air permeability and tend to fatigue the feet after long-term wear. Besides, they fit badly with the feet and may easily cause the fore part of the foot to deform if worn for a long time.

WO 2010/012401 by O'Connor et al. discloses a footwear outsole 1 made of a lather lamina 3 with ground contact lugs 4 moulded at the bottom of the layer lamina 3 and a series of very thin parallel strips 9 bonded with adhesive at the top of the leather lamina 3. An outsole moulding 2 may be stitched 6 or moulded around the outer edges of the leather lamina 3. A problem with such outsole1 is that the lugs 4 and strips 9 may become detached from the leather lamina, during use for example, because the bonding between the lamina 3 and the lugs 4 and strips 9 is not strong enough. Also, using stitching 6 to bond the outsole 2 adds an additional stitching step using stitching machinery in addition to the other manufacturing and moulding steps using moulding machinery and potentially increases the costs and complexity.

There is therefore a need in the market for a more durable shoe sole, while maintaining fabrication costs and complexity at low levels.

The present invention discloses a technology which overcomes the above-mentioned shortcomings by providing a sole which can fit snugly with the foot, has good air permeability and elegant appearance. It can automatically adapt to the shape of the foot, and is therefore suitable for long-term wear.

### SUMMARY OF INVENTION

According to a preferred embodiment of the present invention, there is provided a method for forming a footwear sole comprising a fore sole and a rear sole. The method comprises: providing a midsole layer having one or more midsole injection holes and one or more midsole bores distributed thereon, the midsole injection holes and the midsole bores extending between an underside of the midsole layer and an upper surface of the midsole layer; providing a first female mould comprising one or more first downward concave cavities and first raised areas; placing said midsole layer onto said first female mould, and aligning said midsole injection holes and said midsole bores with said first downward concave cavities provided in said first female mould; providing a first male mould comprising a first injection area comprising one or more of first bores and one or more first injection holes; assembling and fixing said first male mould and said first female mould so that each of said midsole bores and said midsole injection holes are respectively aligned with each of said first bores and each of said first injection holes; infusing a first formula plastic into said first male mould by way of said first injection holes and said midsole injection holes into said first downward concave cavities, wherein said first formula plastic is channeled through each of said first injection holes and each of said midsole injection holes into each of said downward concave cavities and shaped up resulting in raised soles lines on said fore sole, and further wherein said first formula plastic inside each of said first downward concaves passes through each of said midsole bores and into each of said first bores to form one or more protuberances which are embedded with said midsole layer; splitting said first male mould and said first female mould to remove said midsole layer comprising said raised sole lines and said protuberances; taking said midsole layer out of said first male mould and said first female mould and placing said midsole layer into a footwear sole-shaped second mould for injection moulding with a second formula plastic to form one or more second raised sole lines on the upper surface of the midsole layer, the second raised sole lines being embedded with the protuberances to thereby anchor the first raised sole lines with the second raised sole lines.

Advantageously, the provision of bores in the midsole layer allow for better anchoring of the first sole lines on one side of the midsole layer with the second sole lines on the other side of the midsole layer by means of the protruding protuberances being embedded with the second formula plastic.

Preferably, the sole mould is used to fabricate high-quality soles with great efficiency, wherein the sole features good air permeability and is suitable for long-term wear because it can fit snugly with the foot by adapting itself automatically to the shape of the foot.

Preferably, the second mould may further include a second female mould and a second male mould, both configured in the same shape as a complete foot sole and can fit into each other. Further, the aforementioned first female mould and the first male mould, both resembling the fore part of the sole, also match the fore part of the sole-shaped second female mould and the second male mould. The said second female mould further includes a second downward concave in the same shape as and at the corresponding position of the first downward concave of the first female mould. The said second male mould further features a second injection area in the same shape as and at the corresponding position of the second downward concave. Still further, a second injection hole (which passes through the leather layer) is designed on the said second injection area. The second male mould further features an upward-concaved third injection area in the rear part of the sole, as well as a second injection hole (which passes through the leather layer) in the said third injection area. The leather layer, having been processed by the first female mould and the first male mould, is further processed by the second female mould and the second male mould, generating an injection-moulded shoe sole with an embedded leather layer. Meanwhile, a raised injection area is formed on the upper side of the said leather layer.

A middle plate may be inserted between the second female mould and the second male mould when the two are assembled to process the leather layer through injection moulding, so as to produce a cambered or arcuate shoe sole.

Preferably, the first injection hole passes through the first male mould through an injection channel; the second injection hole passes through the second male mould through an injection channel.

The soft plastic used may be thermoplastic polyurethane (TPU). Preferably, the first formula plastic is softer than said second formula plastic.

Preferably, the cylindrical bores and the injection holes have a diameter of about 2mm to 10mm.

The sole mould described in this Invention is simple in structure and easy to operate. It is capable of manufacturing quality foot soles of good air permeability with high efficiency. Moreover, these shoe soles can perfectly match the feet by automatically adapting themselves to the shape of the feet, and are therefore suitable for wear for a long time. Moreover, the product yield is relatively high.

### BRIEF DESCRIPTION OF THE DRAWINGS

Fig. 1 is a side sectional view of a shoe sole formed by the sole mould and method, according to a preferred embodiment of the present invention;

Fig. 2 is a top view of the shoe sole of Fig. 1;

Fig. 3 is a sectional view of a first female mould and a first male mould in an assembled position, according to a preferred embodiment of the present invention;

Fig. 4 is a sectional view of a second female mould and a second male mould in an assembled position, according to a preferred embodiment of the present invention;

Fig. 5 is a top view of two leather layers used by a sole mould for making shoe soles, according to a preferred embodiment of the present invention;

Fig. 6 is a top view of a left and right first female moulds, according to a preferred embodiment of the present invention;

Fig. 7 is a bottom view of a left and right first male moulds, according to a preferred embodiment of the present invention;

Fig. 8 is a sectional view of the leather layer of Fig. 5 after being injection moulded using a first female mould and a first male mould, according to a preferred embodiment of the present invention;

Fig. 9 is a top view of a left and right second female moulds, according to a preferred embodiment of the present invention;

Fig. 10 is a bottom view of a left and right second male moulds, according to a preferred embodiment of the present invention;

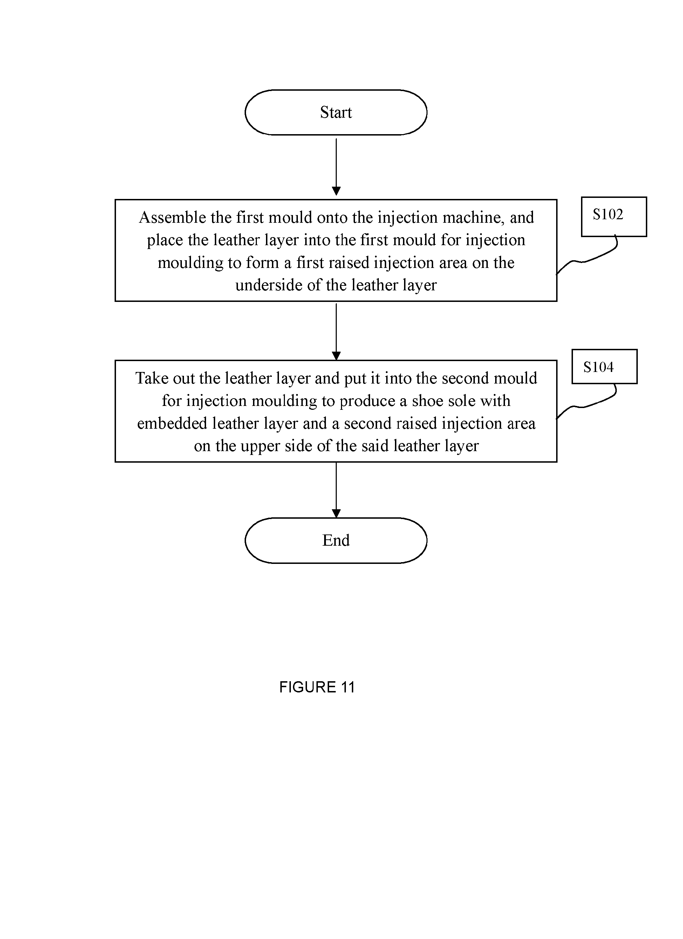

Fig. 11 is a flow process of one example of a method for using the sole mould, according to a preferred embodiment of the present invention;

Fig. 12 is a flow process of another example of a method for using the sole mould, according to a preferred embodiment of the present invention;

### DETAILED DESCRIPTION OF THE PREFERRED EMBODIMENTS

The preferred embodiments of this Invention will now be described by referring to the attached drawings.

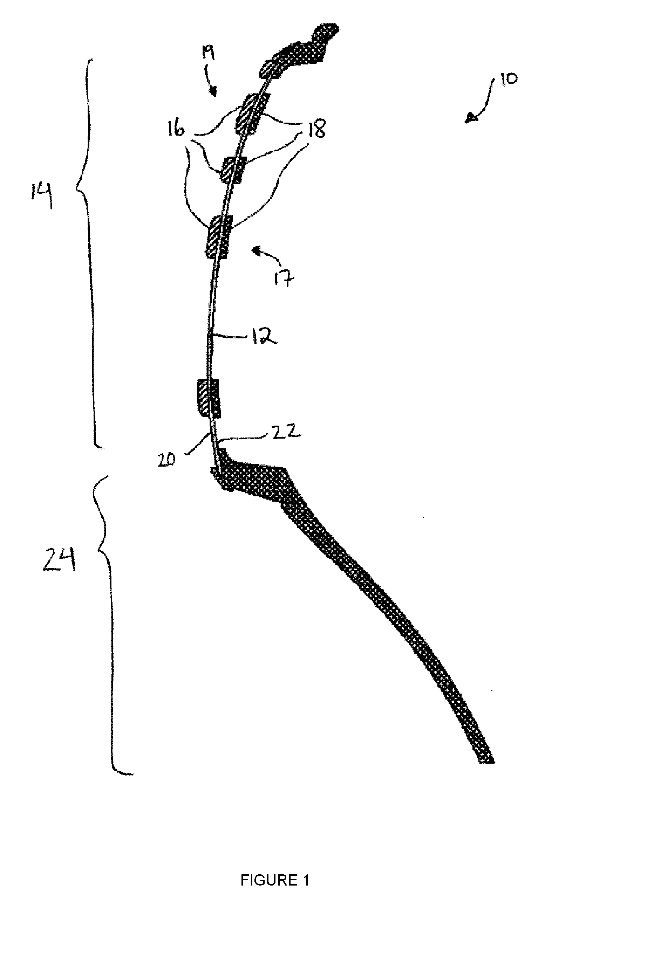

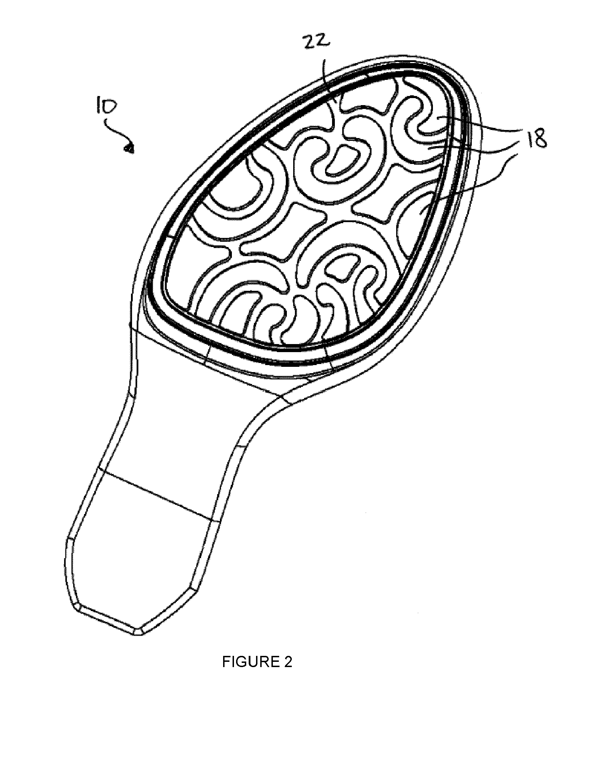

Now referring to Fig. 1 and Fig. 2, there illustrated a shoe sole 10 fabricated according to a method of the present invention. The shoe sole has good air permeability and is suitable for long-time wear, as mentioned in the Background. This shoe sole 10 fits snugly with the foot (not shown) by automatically adapting itself to the shape of the foot. The main body or midsole layer 12 of the fore sole 14 is illustratively a leather layer which is primarily made of leather materials. By way of injection-moulding soft plastics, one or more first raised sole lines 16 and one or more second raised sole lines 18 are formed respectively on an underside 20 of the midsole leather layer 12 to thus form an outer sole portion 19 and an upper surface 22 of the midsole leather layer 12 to thus form an inner sole portion 17. A rear part 24 of the sole 10 is also obtained by injection-moulding the same plastics and is integrated with the leather layer 12 to constitute a complete shoe sole 10. The raised sole lines 16, 18 are shaped like ribs that define channels in between these ribs, which ensure good air circulation.

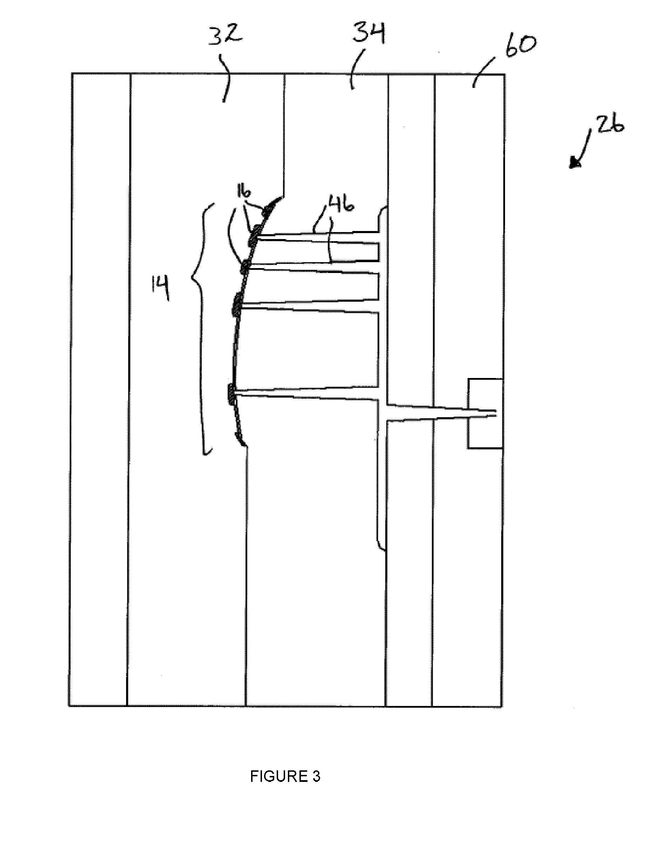

Now referring to Fig. 3, Fig. 4 and Fig. 5, in addition to Fig. 1, there is illustrated a sole mould according to an illustrative embodiment of the present invention. The sole mould includes two parts: a first mould 26 which resembles a fore sole 14 and a second mould 28 which has the shape of a complete foot sole. The first mould 26 and the second mould 28 are used successively to produce the shoe sole 10. Firstly, the first mould 26 is used to treat the leather layer 12, in particular the fore part 14 of the shoe sole 10, by injection moulding, which forms the one or more first raised sole lines 16 on the underside 20 of the leather layer 12. Secondly, the second mould 28 is used to treat the leather layer 12 bearing the first raised sole lines 16, resulting in one or more second raised sole lines 18 on the upper surface 22 of the leather layer 12. Meanwhile, the rear part 24 of the shoe sole 10 is obtained by injection-moulding soft plastics in the second mould 28 such that the rear part 24 is integrated with the leather layer 12. A finished sole 10 comprising one or more second raised sole lines 18 of the fore sole 14 on the upper surface 22 of the midsole 12 to form the inner sole portion 17 and the one or more first raised sole lines 16 of the fore sole 14 on the underside 20 of the shoe sole 10 to form the outer sole portion 19 is produced by the moulds, 26 and 28.

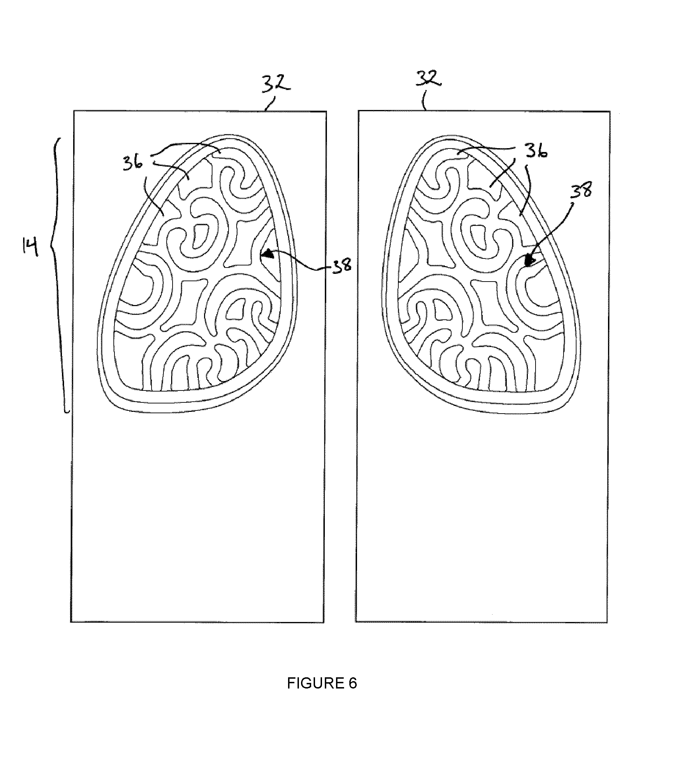

Now referring to Fig. 6, in addition to Fig.1, Fig. 3, Fig. 4 and Fig. 5, the first mould 26 further includes a first female mould 32 and a first male mould 34, both of which are available as a pair to produce a pair of shoe soles 10. The first female mould 32 and the first male mould 34 are configured in the same shape as the fore sole 14 of the foot and fit into each other when assembled as illustrated. The first female mould 32 further contains one or more first downward concave cavities as in 36 and a first raised area 38 which when injected moulded, or infused with plastic, form the raised sole lines 16 on the underside 20 of the leather layer 12.

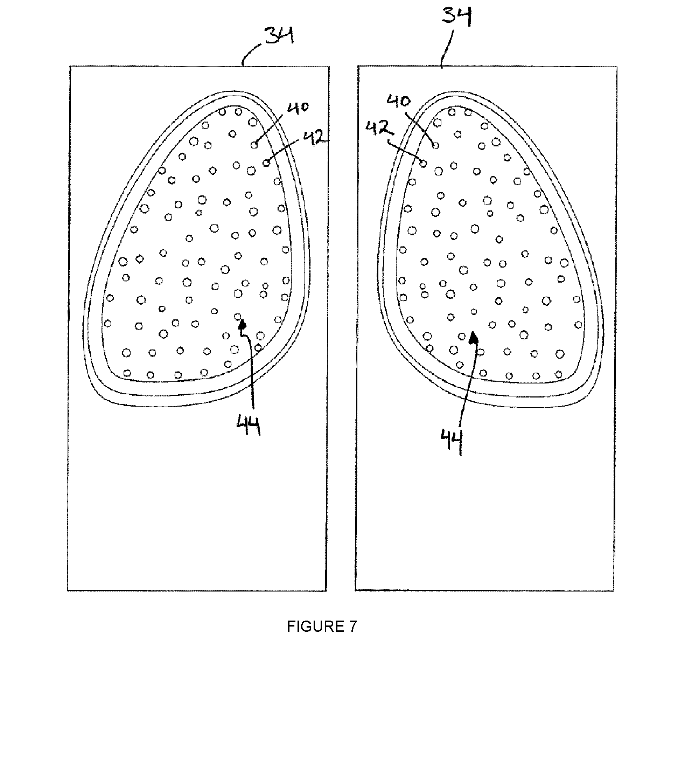

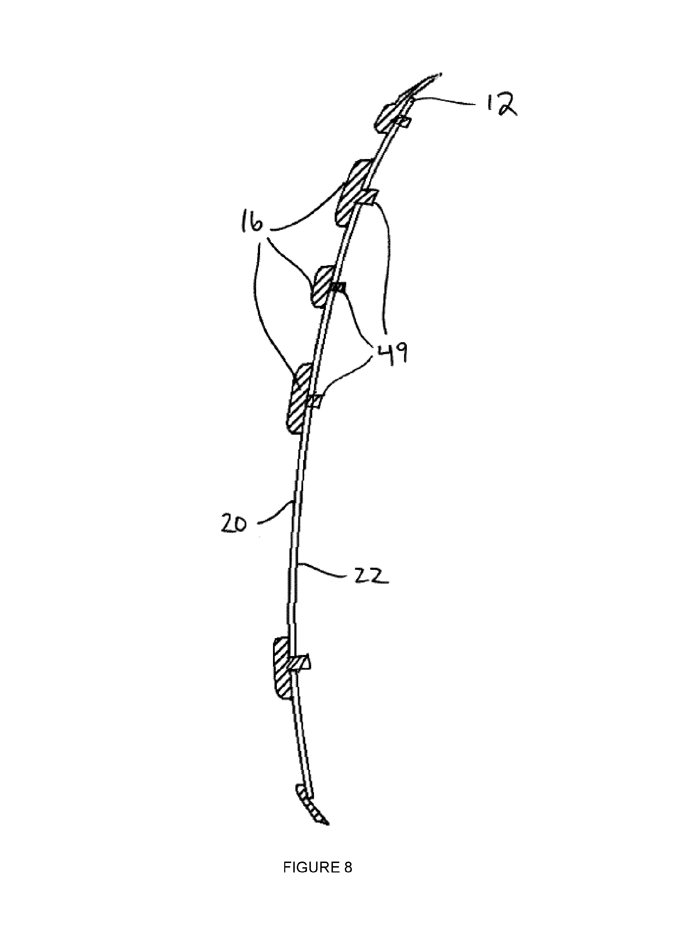

Now referring to Fig. 7 and Fig. 8, in addition to Fig. 3, the first male mould 34 includes one or more cylindrical bores 40 and one or more first injection holes 42 in a first injection area 44 each one of which are in fluid communication with one of the one ore more first downward concave cavities 36 via each of one or more second injection hole 45 and each of one or more second cylindrical bore 47 respectively provided for in the layer 12. The one or more second cylindrical bores 47 and the one or more second injection hole 45 provide fluid communication for the plastic between the one or more first downward concave cavities 36 and the one or more first cylindrical bores 40 and the one or more first injection holes 42 through the layer 12 when respectively aligned therewith. Illustratively, through the one or more first injection hole 42, each of which are in fluid communication with an injection channel 46, soft plastic is supplied from the injection channels 46 to be infused into the one ore more first downward concave cavities 36 via the one or more second injection holes 45. Once plastic is infused into the one or more first downward concave cavities as in 36, plastic is allowed to pass through the layer 12 via the one or more second cylindrical bores as in 47 and into the one or more of first cylindrical bore 40 provided for in the first male mould 34 such that one or more plastic protuberances as in 49 are embedded within the midsole layer 12 and extend from the upper surface. The first female mould 32 and the first male mould 34 are then assembled to mould the plastic, leaving the one or more first raised sole lines 16 on the under side 20 of the leather layer 12.

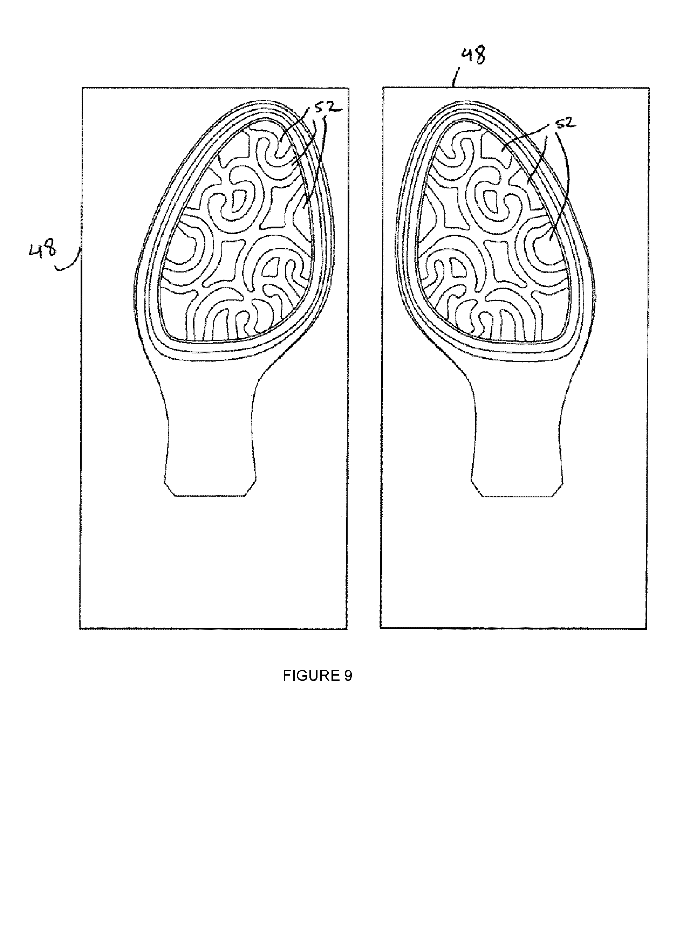

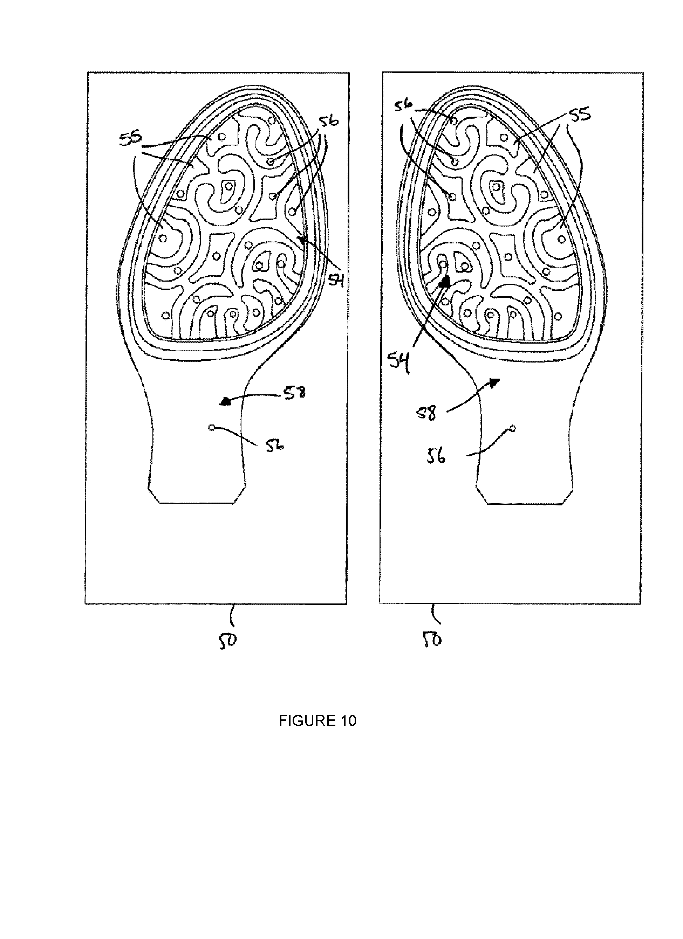

Now referring to Fig. 9 and Fig. 10, the second mould 28 further includes a second female mould 48 and a second male mould 50, both of which are available in pair to produce a pair of shoe soles 10. The said second female mould 48 and second male mould 50 are configured in the same shape as a complete foot sole 10 and can fit into each other. Furthermore, the aforementioned first female mould 32 and the first male mould 34 also match the fore part 14 of the sole-shaped second female mould 48 and the second male mould 50. The second female mould 48 further includes one or more second downward concave cavities as in 52 in the same shape as and at the corresponding position of the one or more first downward concave cavities as in 36. The second male mould 50 further features a second injection area 54 comprising one or more second upward concave cavities as in 55 in the same shape as and at the corresponding position of the one or more second downward concave cavities as in 52. Still further, one or more second injection holes 56 are provided in the second injection area 54 for each of the one or more second upward concave cavities as in 55.

Still referring to Fig. 10, the second male mould 50 further features an upward-concaved third injection area 58 to form the rear part 24 of the sole 10 when it is injected moulded, as well as a second injection hole 56 for injecting plastic into the third injection area 58. The leather layer 12, having been processed using the first female mould 32 and the first male mould 34, is further processed using the second female mould 48 and the second male mould 50, generating an injection-moulded shoe sole 10 with an embedded leather layer 12 by infusing soft plastic into the second injection area 54 and the third injection area 58 through the second injection hole 56 and the injection channels 46. As a result, the one or more second raised sole lines 18 are formed on the upper surface 22 of the leather layer 12.

It should be noted that the soft plastic being used for injection purposes for the sole mould described herein is illustratively thermoplastic polyurethane (TPU). Illustratively, the plastic used to form the one ore more first raised sole lines 16 may be harder than the plastic used to form the one or more second raised sole lines 18.

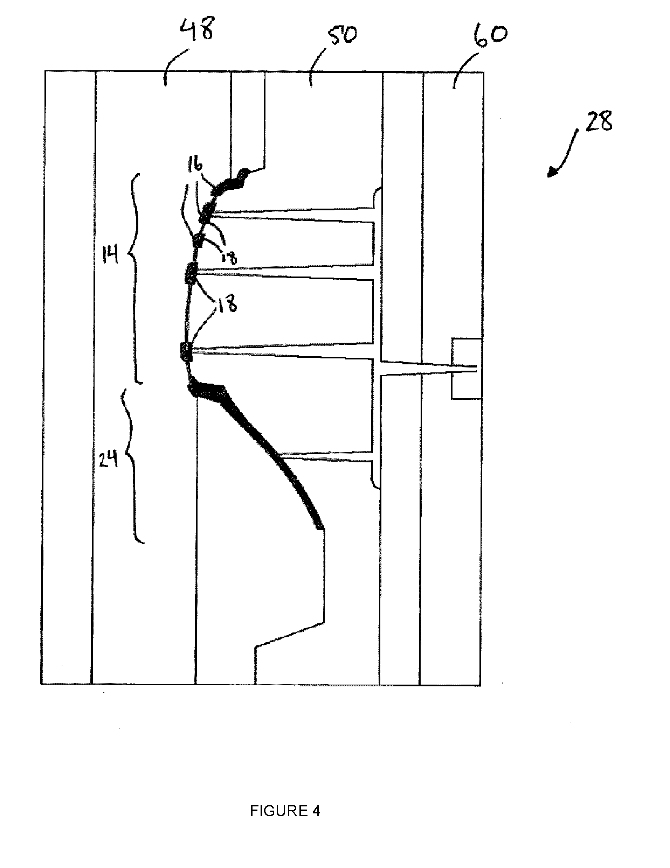

Now referring back to Fig. 1 and Fig. 4, the sole mould provided in the present Invention further includes a middle plate 60, which is inserted between the second female mould 48 and the second male mould 50 when the two are assembled for injection moulding the leather layer 12. The ultimate purpose is to produce a curved shoe sole, for instance the curved rear part of high-heeled leather shoes for women.

The sole mould described in this Invention is simple in structure and easy to operate. It is capable of manufacturing quality foot soles of good air permeability with high efficiency. Moreover, these shoe soles 10 can perfectly match the feet by automatically adapting themselves to the shape of the feet, and are therefore suitable for wear over a long period of time. Moreover, the product yield is relatively high.

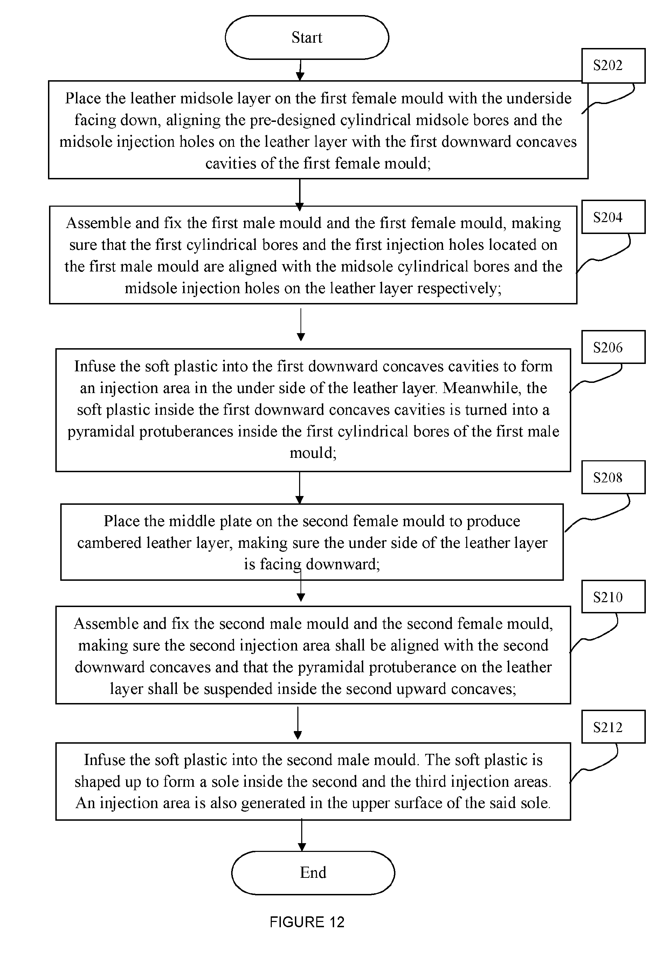

Now referring to Fig. 12, there is provided an illustrative example of the method of using the sole mould which comprises the following steps.

Step S102: Assemble the fore sole-shaped first mould 26 onto an injection machine (not shown). After that, place the leather layer 12 into the first mould 26 for injection moulding to form the first raised area 38 on the underside 20 of the leather layer 12 comprising one or more first raised sole lines 16.

Step S104: Take the leather layer 12 out of the first mould 26 and put it into the foot sole-shaped second mould 28 for injection moulding to produce a shoe sole 10 with an embedded leather layer 12 comprising the second raised injection area 54 on the upper surface 22 of the leather layer 12 comprising the one or more second raised sole lines 18.

Now referring to Fig. 12, there is provided another illustrative example of the method of using the sole mould is composed of the following steps :

Step S202: Assemble the fore sole-shaped first female mould 32 of the first mould 26 onto the injection machine. Place the leather layer 12 on top of the first female mould 32 with the underside 20 facing downwards and align the each pre-designed one or more second cylindrical bores 47 and one or more second injection holes 45 on the leather layer 12 with the each of the one or more first downward concave cavities 36 of the first female mould 32.

Step S204: Assemble and fix the fore sole-shaped first male mould 34 and the first female mould 32, making sure that each of the first cylindrical bores 40 and each of the first injection holes 42 located on the first male mould 34 are aligned with each of second cylindrical bores 47 and each of the second injection holes 45 on the leather layer 12 respectively. Then, place a puller plate 64 on top of the first male mould 34.

Step S206: By way of the one or more first injection hole 42 and the one or more injection channels 46, infuse the soft plastic into the first male mould 34 by using an injection machine (not shown). The soft plastic, after going through the one or more first injection holes 42 on the first male mould 34 is channelled into the one or more first downward concave cavities 36 of the first female mould 32 and shaped up, resulting in the first raised area 38 on the underside 20 of the leather layer 12 to form the first one or more first raised sole lines 16. Further, the soft plastic inside the one or more first downward concave cavities 36 moves through the one or more second cylindrical bores 47 of the leather layer 12 and into the one or more first cylindrical bores 40 to form one or more pyramidal protuberances 49, which are integrated with the leather layer 12. After that, the first male mould 34 and the first female mould 32 are split to remove the leather layer 12 bearing a first injection area 44 on the underside 20.

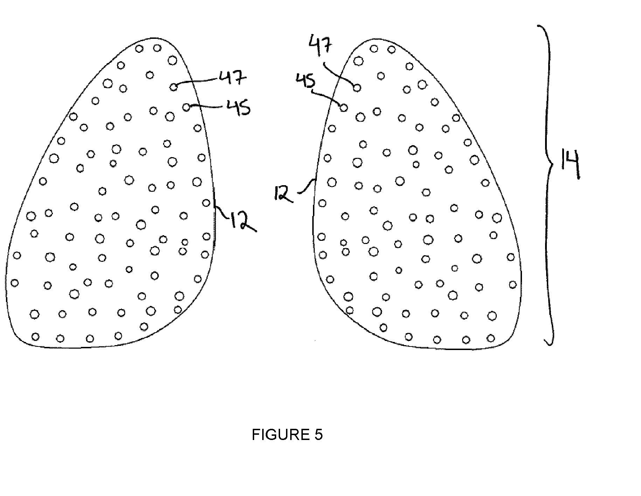

Referring back to Figure 5, it is preferable to pre-punch the midsole layer 12 to form holes matching with the cylindrical bores 47 and the injection holes 45 prior to placing the midsole 12 on top of the first female mould 32. Alternatively, the cylindrical bores 47 and the injection holes 45 may be punched in the midsole 12 once the midsole is in the first female mould 32.

Step S208: Assemble the foot sole-shaped second female mould 48 of the second mould 28 onto the injection machine and place the middle plate 60 on the said second female mould 48. Lay up the leather layer 12 onto the middle plate 60, making sure that the underside 20 of the leather layer 10 faces downward and that the first injection area 44 on the underside 20 of the leather layer 10 shall match with the second downward concave cavities 52 of the second female mould 48. The final purpose is to produce arcuation on the leather layer 12;

Step S210: Assemble and fix the foot sole-shaped second male mould 50 and the second female mould 48 of the second mould 28, making sure that the second injection area 54 of the second mould is aligned with the one or more second downward concave cavities 52. When aligned, the one or more pyramidal protuberances 49 on the leather layer 12 are suspended, or project, inside the second injection area 54. Then, place the puller plate 64 on top of the second male mould 50.

Step S212: By way of the one or more second injection holes 56 on the second male mould 50 and the one or more injection channels 46, infuse the soft plastic into the second male mould 50 by using an injection machine. The soft plastic is moulded into a shoe sole 10 to combine with embedded leather layer 12 and the one or more pyramidal protuberances 49 inside the second injection area 54 and the third injection area 58. During this process, the one or more pyramidal protuberances 49 as mentioned in Steps S206 and S210 are embedded into the plastic injected into the one or more second upward concave cavities 52, therefore leaving a second raised injection area 54 of second raised sole lines 18 on the upper surface 22 of the leather layer 12.

Easy to operate, the sole mould described in this Invention is capable of manufacturing quality shoe soles of good air permeability with high efficiency. These shoe soles can perfectly match the feet by automatically adapting themselves to the shape of the feet, and are therefore suitable for wear over a long time. Moreover, the product yield is relatively high.

The shoe sole is particularly comfortable to wear when using a leather midsole. Indeed, because of the relatively high elasticity of leather, the shoe sole may wrap up feet of different shapes. Because parts of the leather midsole are not covered with plastic, it provides with good air permeability and ventilation. The shoe sole is comfortable, cooler and drier compared to other existing shoe soles and solves problems of long-time wearing, poor air permeability, dampness and heating.

## Claims

1. A method for forming a footwear sole (10) comprising a fore sole (14) and a rear sole (24), the method comprising:
providing a midsole layer (12) having one or more midsole injection holes (45) and one or more midsole bores (47) distributed thereon, the midsole injection holes (45) and the midsole bores (47) extending between an underside (20) of the midsole layer (12) and an upper surface (22) of the midsole layer (12);
providing a first female mould (32) comprising one or more first downward concave cavities (36) and first raised areas (38);
placing (S202) said midsole layer (12) onto said first female mould (32), and aligning said midsole injection holes (45) and said midsole bores (47) with said first downward concave cavities (36) provided in said first female mould (32);
providing a first male mould (34) comprising a first injection area (44) comprising one or more of first bores (40) and one or more first injection holes (42);
assembling and fixing (S204) said first male mould (34) and said first female mould (32) so that each of said midsole bores (47) and said midsole injection holes (45) are respectively aligned with each of said first bores (40) and each of said first injection holes (42); and
a step A3 (S206) comprising infusing a first formula plastic into said first male mould (34) by way of said first injection holes (42) and said midsole injection holes (45) into said first downward concave cavities (36), wherein said first formula plastic is channeled through each of said first injection holes (42) and each of said midsole injection holes (45) into each of said downward concave cavities (36) and shaped up resulting in raised soles lines (16) on said fore sole (14), and further wherein said first formula plastic inside each of said first downward concaves (36) passes through each of said midsole bores (47) and into each of said first bores (40) to form one or more protuberances (49) which are embedded with said midsole layer (12); and
splitting said first male mould (34) and said first female mould (32) to remove said midsole layer (12) comprising said raised sole lines (16) and said protuberances (49); and
a step B (S104) comprising taking said midsole layer (12) out of said first male mould (34) and said first female mould (32) and placing said midsole layer (12) into a shoe sole-shaped second mould (28) for injection moulding with a second formula plastic to form one or more second raised sole lines (18) on the upper surface (22) of the midsole layer (12), the second raised sole lines (18) being embedded with the protuberances (49) to thereby anchor the first raised sole lines (16) with the second raised sole lines (18).

2. The method of claim 1, wherein said step B (S104) comprises:
a step B1 (S210) comprising providing a second female mould (48) and placing said midsole (12) onto said second female mould (48) so that said first raised lines (16) match with said one more second downward concaves (52) of said second female mould (48);
a step B2 (S210) comprising providing a second male mould (50) comprising a second injection area (54) comprising one or more second upward concave cavities (55) and one or more second injection holes (56) and assembling and fixing said second male mould (50) and said second female mould (48), such that each of said one or more protuberances (49) protrudes inside each of said one or more second upward concave cavities (55); and
a step B3 (S212) comprising infusing said second formula plastic into each of said one or more second upward concave cavities (55) through said one or more second injection holes (56) such that said second formula plastic is moulded with said midsole layer (12) and with each of said one or more protuberances (49) to form said one or more second raised sole lines (18) on the upper surface (22) of the midsole layer (12).

3. The method of claim 2, wherein said step B1 (S210) further comprises :
positioning a middle plate (60) on top of the said second female mould (48);
placing said midsole layer (12) on said middle plate (60);
matching said first raised injection area (44) on said underside (20) with said one or more second downward concave cavities (55) of said second female (48) mould; and
infusing said second formula plastic into an upwardly-concaved third injection area (58) for forming said rear sole (24).

4. The method according to any one of claims 1 to 3, wherein said first formula plastic is softer than said second formula plastic.

5. The method according to any one of claims 1 to 4, wherein said bores (40, 47) and said injection holes (42, 45) have a diameter of 2 mm to 10 mm.

6. The method according to any one of claims 1 to 5, wherein said midsole layer (12) comprises leather.

7. A footwear sole fabricated according to the method of any one of claims 1 to 6.
